# EUROPÄISCHE PATENTSCHRIFT

(11) **EP 1 671 193 B1**
(45) Veröffentlichungstag und Bekanntmachung des Hinweises auf die Patenterteilung: **06.08.2008**
(21) Anmeldenummer: 04765858.8
(22) Anmeldetag: 06.10.2004
(51) Int. Cl.: G05B 19/406

(54) **VERFAHREN ZUR AUTOMATISCHEN OPTIMIERUNG DES MATERIALABTRAGS BEI DER SPANENDEN BEARBEITUNG EINES WERKSTÜCKS**
METHOD FOR AUTOMATICALLY OPTIMIZING MATERIAL REMOVAL DURING CUTTING OF A WORKPIECE
PROCÉDÉ POUR OPTIMISER AUTOMATIQUEMENT L'ENLÈVEMENT DE MATIÈRE LORS DE L'USINAGE D'UNE PIÈCE

(30) Priorität: 07.10.2003 DE 10346589
(43) Veröffentlichungstag der Anmeldung: 21.06.2006
(73) Patentinhaber: P + L Gmbh & Co. Kg, 20148 Hamburg (DE)
(72) Erfinder: RÖDERS, Jürgen, 20148 Hamburg (DE)
(74) Vertreter: Weber, Joachim
(86) Internationale Anmeldenummer: PCT/EP2004/011176
(87) Internationale Veröffentlichungsnummer: WO 2005/036287

(56) Entgegenhaltungen:
- EP-A- 0 671 677
- EP-A- 0 879 675
- WO-A-02/20213
- DE-A1- 10 114 811
- US-A- 4 823 275

## Beschreibung

Die Erfindung bezieht sich auf ein Verfahren gemäß dem Oberbegriff des Hauptanspruches.

Im Einzelnen bezieht sich die Erfindung auf ein Verfahren zur automatischen Optimierung des Materialabtrags bei der spanenden Bearbeitung eines Werkstücks mittels einer NC-gesteuerten Werkzeugmaschine, bei welchem das Werkzeug längs Werkzeugbahnen relativ zu dem Werkstück bewegt wird.

Bei der spanabhebenden Bearbeitung von Werkstücken auf NC-gesteuerten Maschinen wird der Materialabtrag dadurch realisiert, dass die Maschine das Bearbeitungswerkzeug relativ zum Werkstück bewegt. Die Bewegung folgt dabei einem Bearbeitungsprogramm, das in einer Folge von NC-Befehlen den Bewegungsablauf zwischen Werkstück und Werkzeug definiert.

Die Bearbeitungsprogramme werden an der NC-Steuerung direkt oder aber auf modernen Programmiersystemen (CAD/CAM) auf extra Programmierplätzen programmiert. Der Programmierer legt ausgehend von einem Rohling fest, wie die Bearbeitungsstrategie erfolgen soll. Üblicherweise gibt es einen Schrupparbeitsgang zum Abtragen des Hauptteils des zu entfernenden Materials und einen Schlichtarbeitsgang zum Herstellen der Maßgenauigkeit und der gewünschten Oberfläche. Dazwischen kann es je nach Werkstückgeometrie und -material noch zusätzliche Vorschlichtarbeitsgänge geben, deren Zweck es meistens ist, das nach dem Schrupparbeitsgang stehengebliebene Restmaterial (Restaufmass) weiter zu reduzieren, sodass bei der Schlichtbearbeitung nur noch ein sehr geringer Materialabtrag erfolgen muss. Auch wird bei vielen Anwendungen die Schlichtbearbeitung in mehrere Programme zerlegt, beispielsweise beim Fräsen in einen Programmteil für ein Bearbeitungswerkzeug mit großen Abmessungen für die Bearbeitung der Bereiche des Werkstückes, die mit diesem Werkzeug gut zugänglich sind, und in einen Programmteil für ein Bearbeitungswerkzeug mit kleinen Abmessungen, das die Bereiche des Werkstückes bearbeitet, die von dem größeren Werkzeug auf Grund seiner Abmessungen nicht erreicht werden konnten, beispielsweise enge Nuten oder kleine Innenradien.

Bei diesem Vorgehen kommt es immer wieder vor, dass nach dem Schrupparbeitsgang oder einem Vorschlichtarbeitsgang in Innenecken des Werkstückes, Innenradien oder anderen Bereichen des Werkstückes größere Materialansammlungen stehen bleiben. Wenn diese Materialansammlungen zu groß werden, kann das zu einem Werkzeugbruch oder auch erhöhtem Werkzeugverschleiß bei der nachfolgenden Bearbeitung führen. Da die zu bearbeitenden Werkstückgeometrien häufig sehr kompliziert sind, sind diese Fälle schwer vorherzusehen. In der Folge muss der Bediener an der Maschine den Bearbeitungsprozess überwachen. Gegebenenfalls muss er den Vorschub der Bearbeitung reduzieren. Bei zu großen Materialansammlungen reicht das jedoch nicht aus. Dann bleibt nur die Programmierung eines weiteren Hilfsprogramms, das gezielt die von der vorherigen Bearbeitung stehen gebliebenen Materialansammlungen entfernt, ehe der Nachfolgearbeitsgang durchgeführt werden kann.

Durch Programmierfehler kann es ferner dazu kommen, dass bereits das erste Schruppprogramm nicht störungsfrei läuft und es zu Werkzeugbruch kommt, weil an einer Stelle zu viel Material auf einmal abgenommen werden soll. Diese Probleme führen insgesamt zu erhöhten Kosten und Zeitaufwand und sind daher unerwünscht.

Bei Werkzeugmaschinen die vorwiegend eine zweidimensionale Bearbeitung ausführen, beispielsweise Drehmaschinen, gibt es diese Probleme nicht, da die Bearbeitung auf Grund der nur vorhandenen zwei Dimensionen sehr überschaubar ist. Rechnergestützte Programmiersysteme legen die Programmschritte so fest, dass die Bearbeitung sicher, d.h. unter Einhaltung der vom Bediener gewünschten Grenzen für die Zerspanung, ausgeführt werden kann.

Anders ist das bei Maschinen mit drei Dimensionen, beispielsweise 3-achsigen Fräsmaschinen. Das gilt besonders für komplexe Fräsbearbeitungen, wie diese im Werkzeug- und Formenbau vorkommen. Es gibt keine Programmier- oder CAD/CAM-Systeme, die die Bearbeitungsprogramme so berechnen, dass ein Überschreiten von Zerspanungsgrenzen sicher vermieden wird, insbesondere wenn eine Folge von Teilprogrammen mit sehr unterschiedlichen Bearbeitungsstrategien für die Herstellung eines Werkstückes programmiert wird. Noch weniger ist das bei MehrAchsmaschinen möglich, beispielsweise bei komplexen 5-Achsbearbeitungen auf Fräsmaschinen.

Ein weiterer Nachteil besteht darin, dass mit den Bearbeitungsprogrammen, die auf Grund der langen Berechnungszeiten meistens komplett vor Beginn der Bearbeitung programmiert werden, häufig an externen Arbeitsplätzen, sämtliche Zustellungen und damit Zerspanungen bei der Durchführung der Bearbeitung festliegen. Der Bediener hat außer der Spindeldrehzahl und dem Vorschub keine Möglichkeit mehr, die Bearbeitung zu beeinflussen. Gegebenenfalls kann er ein Teilprogramm zweimal ablaufen lassen, einmal mit einer Verschiebung des Nullpunktes für das Teilprogramm, sodass die Zerspanung geringer ist. Das ist aber zeitaufwendig.

Die WO 02/20213 A2 beschreibt eine Werkzeugmaschine, bei welcher in einer Vorausberechnungseinrichtung ein Modell in einem dreidimensionalen Raum abgebildet wird, bei welchem auch der Bewegungsablauf des Werkzeugs in dem dreidimensionalen Raum entsprechend abgebildet wird. Dabei wird ermittelt, ob während der Bewegung des Werkzeugs ein über einem vorbestimmten Maximalwert liegender Materialabtrag zu befürchten ist. Wie für diesen Fall vorgegangen wird und welche Lösungen rechnerisch verwirklicht werden, ist in der Druckschrift nicht angesprochen.

Der Erfindung liegt die Aufgabe zugrunde, ein Verfahren der eingangs genannten Art zu schaffen, welches bei einfacher Ausgestaltung und einfacher, betriebssicherer Anwendbarkeit die Nachteile des Standes der Technik vermeidet und eine optimale Materialabnahme gewährleistet.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass die Steuerung mit Hilfe eines Werkstückmodells eine Simulation der Bearbeitung vorberechnet. Vor der eigentlichen Ausführung zumindest eines NC-Befehls wird diese Ausführung in der Simulation simuliert bzw. ausgeführt. Dabei kann der Materialabtrag durch diesen speziellen NC-Befehl bestimmt werden. Dieser berechnete Materialabtrag wird nunmehr mit einem vorgegebenen Grenzwert verglichen. Wenn dieser Grenzwert überschritten ist, erfolgt eine Korrektur des NC-Befehls so, dass das Programm zunächst einen oder mehrere korrigierte NC-Befehle durchführt, um das Werkzeug unter einem geringeren Materialabtrag auf einer Hilfs-Werkzeugbahn zu führen. Es wird somit zumindest ein korrigierter NC-Befehl durchgeführt, ob mehrere korrigierte NC-Befehle durchgeführt werden müssen, hängt von der Bearbeitungssituation und der Werkstückgeometrie ab.

Die Korrektur des NC-Befehls kann an einer beliebigen Stelle oder am Anfang des NC-Befehls erfolgen.

Günstig ist es, wenn der ursprüngliche NC-Befehl zwischengespeichert wird.

Erfindungsgemäß wird der NC-Befehl so korrigiert, dass in der Werkzeugbahn durch die Korrektur keine Kollision mit der Solloberfläche des Werkstücks erfolgt. Dies wird am einfachsten dadurch realisiert, dass das Werkzeug in seiner Achse zurückgezogen wird. Insbesondere bei einer im Wesentlichen zylindrischen Form des Werkzeugs kann somit eine Kollision sicher ausgeschlossen werden.

Erfindungsgemäß werden die NC-Befehle solange korrigiert, bis die Steuerung einen NC-Befehl ermittelt, bei welchem der Grenzwert nicht mehr überschritten ist. Erfindungsgemäß kann das Werkzeug im Bereich der Hilfs-Werkzeugbahnen rückbewegt und mehrmals verfahren werden, bis unter Aufrechterhaltung eines entsprechenden Materialabtrags die gewünschte Oberflächenkontur des Werkstücks vorliegt.

Im Folgenden wird die Erfindung anhand von Ausführungsbeispielen in Verbindung mit der Zeichnung beschrieben. Dabei zeigt:
- Fig. 1: eine schematische Schnittansicht eines typischen Bearbeitungsvorganges der zur Rede stehenden Art,
- Fig. 2: eine Darstellung des in Fig. 1 gezeigten Bearbeitungsvorganges unter Einfügung mehrerer Hilfsbahnen,
- Fig. 3: eine weitere Seiten-Schnittansicht einer Ausführungsvariante der Erfindung, und
- Fig. 4: eine räumliche Darstellung unterschiedlicher Bahnenabfolgen bei der erfindungsgemäßen Werkstückbearbeitung.

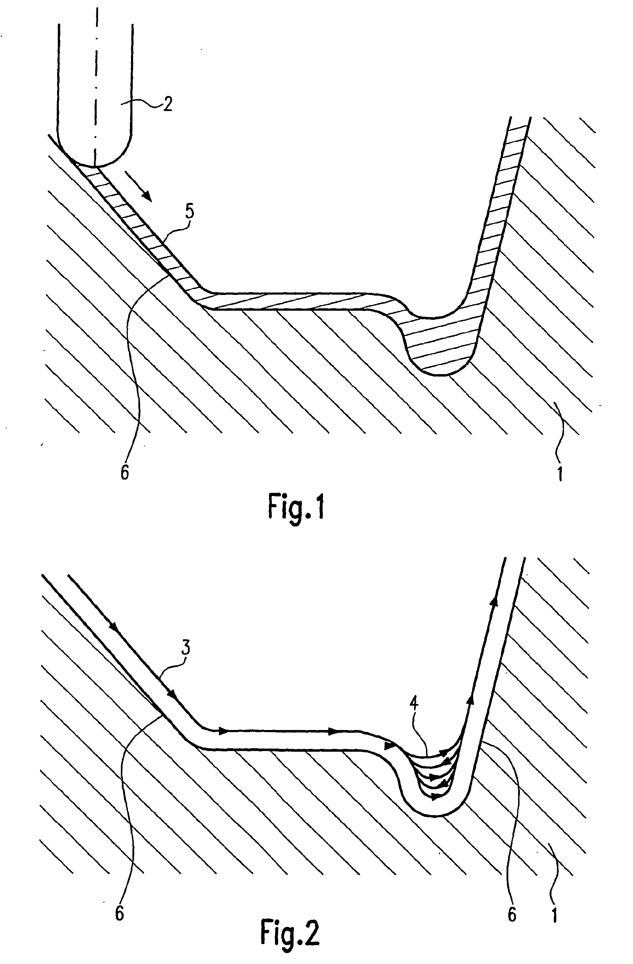

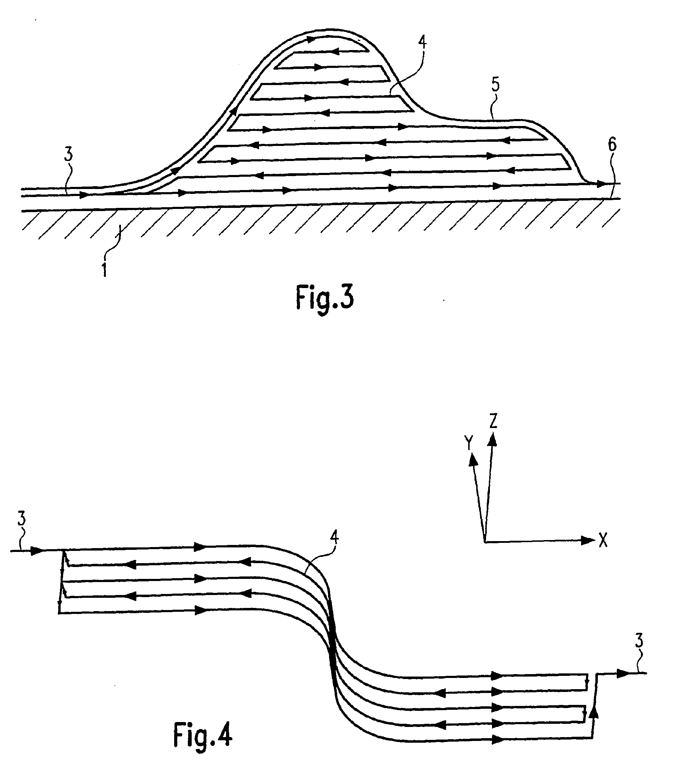

Die Figuren zeigen jeweils in schematischer Darstellung ein Werkstück 1 sowie eine Werkstückoberfläche 5 vor der Bearbeitung mittels eines Werkzeugs 2. Das Werkzeug 2 wird längs Werkzeugbahnen 3 (siehe beispielsweise Fig. 2) geführt. An den Stellen, an welchen mittels eines einzigen Arbeitsdurchganges eine zu große Materialabnahme erforderlich wäre, werden erfindungsgemäße mehrere Hilfsbahnen 4 eingefügt und entsprechend abgearbeitet (siehe Fig. 2 und 3). Mit dem Bezugszeichen 6 ist die Werkstückoberfläche nach der Bearbeitung dargestellt.

Die Erfindung schafft somit ein Verfahren, bei dem eine Überlastung des Werkzeuges bei der Bearbeitung auf Maschinen mit drei oder mehr Maschinenachsen sicher vermieden wird. Erfindungsgemäß wird dazu eine Korrektur der programmierten Werkzeugbahn relativ zum Werkstück durch Einfügen von zusätzlichen Verfahrbefehlen vorgenommen. Diese zusätzlichen Verfahrbefehle bewirken, dass durch das Werkzeug maximal stets nur so viel Material abgetragen wird, wie dies der Bediener anhand von einfachen Grenzen für die Zerspanung vorgibt.

Die Steuerung führt die Korrektur eigenständig während der Bearbeitung nach den Vorgaben des Bedieners aus. Dazu rechnet die Steuerung während der Bearbeitung mit Hilfe eines internen Werkstückmodells in einer Simulation die Bearbeitung mit, so wie das von gängigen Simulationsprogrammen her bekannt ist. Vor der Ausführung eines jeden NC-Befehls durch die Steuerung wird dieser zunächst nur in der internen Simulation ausgeführt und damit der Materialabtrag durch diesen NC-Befehl bestimmt. Werden dabei vom Bediener vorgegebene Grenzen für den Materialabtrag überschritten, beispielsweise das Spanvolumen, die Spantiefe oder maximale seitliche Zustellung, dann wird der NC-Befehl von der Steuerung nicht ausgeführt sondern nur zwischengespeichert. Satt dessen werden zunächst einige korrigierte Verfahrbefehle ausgeführt. Danach wird die Abarbeitung des Bearbeitungsprogramms ab dem zwischengespeicherten Verfahrbefehl fortgesetzt, bei dem es zum Überschreiten der vom Bediener vorgegebenen Grenze kam. Die Bearbeitung folgt dann dem programmierten Bearbeitungsablauf, bis wieder ein NC-Befehl festgestellt wird, bei dem eine Korrektur erfolgen muss. Dann erfolgt wieder erst die Korrektur, dann die weitere Programmabarbeitung. Auf diese Weise wird das ganze Programm sicher ohne Überlastung des Werkzeuges abgearbeitet.

Bei der Berechnung der einzufügenden Werkzeugbahnen ist es wichtig, dass keine Kollision mit der Werkstücksollgeometrie entsteht. Dies kann sehr einfach dadurch erreicht werden, dass die Korrektur in einer Richtung erfolgt, die auf Grund der Werkzeuggeometrie garantiert kollisionsfrei ist. Bei der Fräsbearbeitung von Werkstücken mit kugelförmigen Fräswerkzeugen, bei der der Kugeldurchmesser des Werkzeuges den gleichen Durchmesser hat, wie der Werkzeugschaft, führt ein Rückzug des Werkzeuges in Richtung der Spindelachse (Rotationsachse)aus geometrischen Gründen nicht zu einer Kollision, da die beschriebene Werkzeuggeometrie in Richtung der Spindelachse keine Hinterschnitte herstellen kann. In diesem Fall ist es also sinnvoll die Bahnen in Richtung der Spindelachse zu korrigieren. Bei 3-Achsmaschinen, bei denen die Spindelachse mit der Z-Achse zusammenfällt, muss die Korrektur somit in Richtung der Z-Achse erfolgen.

Die Steuerung muss natürlich auch an den Startpunkt des NC-Befehles zurückkommen, bei dem die Korrektur begonnen hat. Anhand der 3-Achsmaschine, bei der die Z-Achse mit der Spindelachse des Bearbeitungswerkzeuges zusammenfällt, wird das Verfahren dazu beispielhaft etwas näher erläutert.

Ab dem NC-Befehl, ab dem auf Grund der Simulationsrechnung die Korrektur erfolgen muss, führt die Maschine den NC-Befehl in der XY-Ebene in der gleichen Richtung aus, wie vorgegeben, in der Z-Achse wird jedoch eine Korrektur vorgenommen, sodass eine Werkzeugbahn relativ zum Werkstück abgefahren wird, die über der programmierten Sollbahn liegt, sodass die Spanabnahme geringer ist. Am Ende des NC-Befehles wird der nächste aus dem programmierten NC-Programm in der Simulation analysiert. Ist bei diesem die Spanabnahme auch noch zu hoch, so wird dieser sofort im Anschluss ebenfalls mit korrigierter Bahn in Z-Richtung ausgeführt. Das geschieht so lange, bis ein NC-Befehl kommt, bei dem die Spanabnahme wieder innerhalb der vorgegebenen Grenzen liegt. Dieser wird nicht ausgeführt, sondern die Steuerung folgt stattdessen der gerade ausgeführten Werkzeugbahn rückwärts, jedoch mit einer Zustellung in der Z-Achse, die auch bei dem Zurückfahren im Programm zu einem Materialabtrag führt.

Die Fig. 2 bis 4 zeigen jeweils den Vorgang der Abarbeitung einzelner Hilfsbahnen mit jeweils einem weiteren, geeigneten Materialabtrag. Die Hilfsbahnen können entweder mäandernd angeordnet werden oder in anderer Weise an das Profil des Werkstücks (Fig. 2) angepasst werden. Die Fig. 4 zeigt in räumlicher Darstellung die jeweiligen Werkzeugbahnen. Diese sind in der XY-Ebene jeweils gleich, es erfolgt eine Zustellung in der Z-Ebene, um eine entsprechende Bearbeitung des Werkstücks sicherzustellen.

Bei dieser Rückwärtsfahrt muss natürlich im Beispiel der 3-Achsmaschine ebenfalls die Bahn in der XY-Ebene exakt eingehalten werden, um eventuell seitliche Kollisionen mit der Werkstücksollgeometrie zu vermeiden. Der Materialabtrag bzw. die Zustellung in der Z-Achse wird bei der Rückwärtsfahrt so gewählt, dass die vom Bediener vorgegebenen Grenzen für die Zerspanung nicht überschritten werden (mit Hilfe der internen Simulation) und dass die programmierte Werkzeugsollbahn in Z-Richtung nicht unterschritten wird, damit es nicht zu einer Verletzung des Werkstücksollgeometrie kommt. Die Rückfahrt erfolgt bis zu dem Punkt, an dem die Korrektur begonnen hat. Ist dieser erreicht, dann wird mit Hilfe der internen Simulation geprüft, ob die Sollbahn für den oder die zwischengespeicherten NC-Befehle abgefahren werden kann, ohne dass die vorgegebenen Grenzen für die Zerspanung überschritten werden. Ist das nicht der Fall, dann führt die Steuerung eine weitere Hin- und Rückfahrt mit korrigierten Werten für die Z-Achse aus, wie gerade beschrieben. Das erfolgt so lange, bis die programmierte Sollbahn ohne Korrektur und ohne Überschreiten der Grenzen für die Zerspanung ausgeführt werden kann.

Könnte bei der Rückfahrt die Zustellung der Z-Achse auf Grund der vorgegebenen Grenzen der Zerspanung bereits auf die Höhe der programmierten Sollbahn erfolgen, so kann es sinnvoll sein, etwas weniger zuzustellen, damit das Werkzeug bei der nachfolgenden Ausführung der Sollbahn gemäß Programm ab dem zwischengespeicherten NC-Befehl noch eine Materialabnahme ausführt und nicht nur an der Werkstückoberfläche reibt.

Es ist natürlich nicht erforderlich die Korrektur immer am Anfang eines NC-Befehls zu beginnen. Manchmal enthalten NC-Befehle sehr lange Verfahrwege für das Bearbeitungswerkzeug relativ zum Werkstück. Wenn eine Überschreitung der vorgegebenen Grenzen der Zerspanung nur am Ende oder in einem Teilbereich des NC-Befehles vorkommt, dann kann auch die Ausführung des NC-Befehles an einer geeigneten Stelle unterbrochen werden, um die Hilfsverfahrbewegungen mit korrigierter Zustellung zu beginnen. Genauso kann das Ende der korrigierten Werkzeugbahn an einer beliebigen Stelle der durch einen NC-Befehl beschriebenen Werkzeugbahn liegen und muss nicht notwendiger Weise mit dessen Endpunkt zusammenfallen. Auch muss die Anzahl der eingefügten NC-Befehle mit der korrigierten Zustellung bei der Hinfahrt oder bei der Rückfahrt nicht mit der Anzahl der NC-Befehle, die im ursprünglichen Programm vorhanden sind, übereinstimmen. Um die Zerspanleistung möglichst optimal auszuführen, kann es sinnvoll sein, deutlich mehr NC-Befehle für jede Hin- und Rückfahrt zu berechnen, gerade, wenn der in den programmierten NC-Befehlen enthaltene Verfahrweg relativ lang ist. Es ist aber sicher zu stellen, dass seitliche Kollisionen des Werkstücks mit dem Werkzeug vermieden werden, d.h. dass die Korrektur der Werkzeugbahn bei der Hin- und Rückfahrt nur in der Richtung der Rotationsachse des Werkzeuges erfolgt. Um das sicherzustellen, muss die korrigierte Werkzeugbahn bei der Hin- und Rückfahrt mindestens entsprechend viele NC-Befehle enthalten.

Es gibt natürlich Bearbeitungsmaschinen, bei denen eine Zerspanung bei einer Rückfahrt nicht möglich ist, beispielsweise Hobelmaschinen. In diesem Fall muss die Rückfahrt so erfolgen, dass sich das Werkzeug über dem zu dem Zeitpunkt noch am Werkstück befindlichen Material bewegt. Auf Grund der internen Simulationsdaten ist dies ohne Problem durchführbar. Im Beispiel der 3-Achsmaschine muss die Rückfahrt des Werkzeuges lediglich mit einer geringeren Zustellung als bei der letzten Hinfahrt erfolgen.

Um bei der Bearbeitung des Werkstückes noch rechtzeitig reagieren zu können, d.h. rechtzeitig eine Korrektur einfügen zu können, kann es erforderlich sein, dass die Simulationsberechnung nicht einen NC-Befehl vor Ausführung berechnet wird, sondern dass diese mehrere NC-Befehle vor der tatsächlichen Ausführung auf der Maschine Vorlauf hat. Ähnlich einer Look-Ahead Funktion für die Vorschubkontrolle auf modernen Maschinen muss also eine Vorausschau im NC-Programm für die Simulationsrechnung erfolgen.

Das erfindungsgemäße Verfahren lässt sich so zeitoptimiert durchführen, dass bei der ersten Hinfahrt über einen Werkstückbereich, bei dem die Werkzeugbahn korrigiert werden muss, berechnet wird, wie viele Hin- und Rückfahrten erforderlich sind, um auf die gewünschte Sollbahn zu gelangen, unter Einhaltung der Grenzen für die Zerspanung. Vermindert sich die erforderliche Anzahl um eine Hin- und Rückfahrt, ist aber noch nicht bei Null, dann kann bereits eine Rückfahrt bis an die Stelle ausgeführt werden, bei der die bisherige Anzahl von Hin- und Rückfahrten erstmals ermittelt wurde. So werden zunächst die Materialspitzen abgetragen und unnötige Leerwege vermieden. Die Optimierung der einzelnen Bahnen ergibt sich insbesondere aus der Darstellung der Fig. 3.

Die Beschreibung für die 3-Achsmaschine und die Achsbenennungen bei dieser sind nur beispielhaft. Bei Mehrachsmaschinen kann das gleiche Verfahren auch angewendet werden, nur dass die Verringerung der Zustellung in Richtung der Rotationsachse des Bearbeitungswerkzeuges erfolgt. Einzige Voraussetzung für das Verfahren ist, dass das Bearbeitungsprogramm so ausgebildet ist, dass es keine Hinterschnitte in Richtung der Rotationsachse des Werkzeuges am Werkstück herstellt, die bei einer Verringerung der Zustellung durch Rückzug des Werkzeuges in Richtung Rotationsachse verletzt werden würden.

Zu Beginn der Bearbeitung muss der Steuerung die Geometrie des Werkstückrohlings bekannt sein. Außerdem muss bei jedem Werkzeugwechsel die Geometrie des Werkzeuges bekannt sein. Die Geometrie des Werkstückrohlings kann durch einfache Eingaben festgelegt werden oder mit einer geeigneten Werkstückerfassungseinrichtung ermittelt werden, beispielsweise einem in die Maschine integriertem Digitalisiergerät. Gleiches gilt für die Werkzeuge. Deren Geometrien können auch entweder vor der Bearbeitung eingegeben werden oder mit einer geeigneten Vorrichtung, beispielsweise einem in die Maschine integrierten Messlaser, von der Maschine vermessen werden. Die Geometrien von Werkstückrohling und Werkzeugen können natürlich auch im Bearbeitungsprogramm definiert werden.

## Patentansprüche

1. Verfahren zur automatischen Optimierung des Materialabtrags bei der spanenden Bearbeitung eines Werkstücks (1) mittels einer NC-gesteuerten Werkzeugmaschine, bei welchem das Werkzeug (2) längs Werkzeugbahnen relativ zu dem Werkstück bewegt wird, wobei
- die Steuerung mittels eines Werkstückmodells eine Simulation der Bearbeitung vorberechnet,
- vor der realen Ausführung zumindest eines NC-Befehls dieser in der Simulation ausgeführt und der Materialabtrag durch diesen NC-Befehl bestimmt wird,
- der berechnete Materialabtrag mit einem vorgegebenen Grenzwert verglichen wird,
**dadurch gekennzeichnet,**
- **dass** bei Überschreiten des Grenzwerts eine Korrektur des NC-Befehls erfolgt infolge dieser Korrektur und das Programm mit einem oder mehreren eingefügten und korrigierten NC-Befehlen zur Einführung einer eingefügten Hilfs-Werkzeugbahn (4) unter geringerem Materialabtrag durchgeführt wird,
- wobei die Hilfs-Werkzeugbahn (4) durch Verringerung der Zustellung durch Bewegung des Werkzeugs (2) in Richtung seiner Rotationsachse realisiert wird.

2. Verfahren nach Anspruch 1, **dadurch gekennzeichnet, dass** die Bewegung des Werkzeugs (2) in Richtung der Z-Achse erfolgt.

3. Verfahren nach Anspruch 1 oder 2, **dadurch gekennzeichnet, dass** die Korrektur am Anfang eines NC-Befehls erfolgt.

4. Verfahren nach Anspruch 1 oder 2, **dadurch gekennzeichnet, dass** die Korrektur an beliebiger Stelle eines NC-Befehls erfolgt.

5. Verfahren nach einem der Ansprüche 1 bis 4, **dadurch gekennzeichnet, dass** der ursprüngliche NC-Befehl zwischengespeichert wird.

6. Verfahren nach einem der Ansprüche 1 bis 5, **dadurch gekennzeichnet,**
- **dass** der eine oder die mehreren korrigierten NC-Befehle durchgeführt werden, bis die Steuerung einen NC-Befehl ermittelt, bei dem der Grenzwert nicht überschritten wird,
- **dass** dieser letztgenannte NC-Befehl nicht ausgeführt wird, und
- **dass** das Werkzeug (2) rückbewegt und mit einem nochmals korrigierten NC-Befehl längs einer weiteren Hilfs-Werkzeugbahn (4) bewegt wird.

7. Verfahren nach Anspruch 6, **dadurch gekennzeichnet, dass** der Vorgang wiederholt wird, bis der Grenzwert nicht mehr überschritten wird und dass dann der oder die ursprünglich gespeicherten NC-Befehle durchgeführt werden.

8. Verfahren nach einem der Ansprüche 6 oder 7, **dadurch gekennzeichnet, dass** die Rückbewegung unter Spanabnahme durch das Werkzeug (2) erfolgt.

9. Verfahren nach einem der Ansprüche 6 oder 7, **dadurch gekennzeichnet, dass** die Rückbewegung ohne Spanabnahme durch das Werkzeug (2) erfolgt.

## Claims

1. Method for automatically optimizing material removal during the machining of a workpiece (1) by means of an NC-controlled machine tool, in which the tool (2) is moved relative to the workpiece along tool paths,
- the control pre-calculating a simulation of the machining by means of a workpiece model,
- before the actual execution of at least one NC instruction, the latter being executed in the simulation and the removal of material being determined via this NC instruction,
- the calculated removal of material being compared with a predefined limiting value,
**characterized**
- **in that,** if the limiting value is exceeded, a correction is made to the NC instruction and, as a result of this correction, the program is carried out with one or more inserted and corrected NC instructions in order to introduce an inserted auxiliary tool path (4) with less removal of material,
- the auxiliary tool path (4) being implemented by reducing the feed by moving the tool (2) in the direction of its axis of rotation.

2. Method according to Claim 1, **characterized in that** the movement of the tool (2) takes place in the direction of the z axis.

3. Method according to Claim 1 or 2, **characterized in that** the correction is made at the start of an NC instruction.

4. Method according to Claim 1 or 2, **characterized in that** the correction is made at any desired point of an NC instruction.

5. Method according to one of Claims 1 to 4, **characterized in that** the original NC instruction is temporarily stored.

6. Method according to one of Claims 1 to 5, **characterized**
- **in that** the one corrected NC instruction or the plurality of corrected NC instructions is/are carried out until the control determines an NC instruction in which the limiting value is not exceeded,
- **in that** this last-named NC instruction is not executed, and
- **in that** the tool (2) is moved back and is moved along a further auxiliary tool path (4) with an NC instruction that is once more corrected.

7. Method according to Claim 6, **characterized in that** the procedure is repeated until the limiting value is no longer exceeded, and **in that** the NC instruction or the NC instructions originally stored are then carried out.

8. Method according to either of Claims 6 and 7, **characterized in that** the movement back is carried out with material removal by the tool (2).

9. Method according to either of Claims 6 and 7, **characterized in that** the movement back is carried out without material removal by the tool (2).

## Revendications

1. Procédé d'optimisation automatique de l'enlèvement de matière lors de l'usinage par enlèvement de copeaux d'une pièce (1) à l'aide d'une machine-outil à commande numérique, dans lequel l'outil (2) se déplace le long de trajectoires d'outils par rapport à la pièce, dans lequel
- la commande calcule au préalable une simulation de l'usinage à l'aide d'une pièce modèle,
- avant la réalisation réelle d'au moins un ordre de commande numérique, celui-ci est réalisé dans la simulation et l'enlèvement de matière est déterminé par cet ordre de commande numérique,
- l'enlèvement de matière calculé est comparé à une valeur limite prédéfinie,
**caractérisé en ce**
- **qu**'en cas de dépassement de la valeur limite, il y a une correction de l'ordre de commande numérique et suite à cette correction le programme est réalisé avec un ou plusieurs ordres de commande numérique corrigés et insérés pour l'introduction d'une trajectoire d'outil auxiliaire (4) insérée pour un enlèvement de matière plus faible,
- la trajectoire d'outil auxiliaire (4) étant réalisée par réduction de l'approche par déplacement de l'outil (2) en direction de son axe de rotation.

2. Procédé selon la revendication 1, **caractérisé en ce que** le déplacement de l'outil (2) se fait dans la direction de l'axe Z.

3. Procédé selon la revendication 1 ou 2, **caractérisé en ce que** la correction se déroule au début d'un ordre de commande numérique.

4. Procédé selon la revendication 1 ou 2, **caractérisé en ce que** la correction se déroule en n'importe quel point d'un ordre de commande numérique.

5. Procédé selon l'une des revendications 1 à 4, **caractérisé en ce que** l'ordre de commande numérique initial est temporairement mis en mémoire.

6. Procédé selon l'une des revendications 1 à 5, **caractérisé,**
- **en ce que** l'un ou la pluralité d'ordres de commande numérique corrigés sont exécutés jusqu'à ce que la commande détermine un ordre de commande numérique, pour lequel la valeur limite n'est pas dépassée,
- **en ce que** ce dernier ordre de commande numérique n'est pas exécuté, et
- **en ce que** l'outil (2) est reculé et déplacé le long d'une autre trajectoire d'outil auxiliaire (4) avec un ordre de commande numérique corrigé une nouvelle fois.

7. Procédé selon la revendication 6, **caractérisé en ce que** le processus est répété jusqu'à ce que la valeur limite ne soit plus dépassée et **en ce qu'**alors le ou les ordres de commande numérique enregistrés initialement sont exécutés.

8. Procédé selon l'une des revendications 6 ou 7, **caractérisé en ce que** le déplacement en arrière se fait avec enlèvement de copeaux par l'outil (2).

9. Procédé selon l'une des revendications 6 ou 7, **caractérisé en ce que** le déplacement en arrière se fait sans enlèvement de copeaux par l'outil (2).
